# EUROPEAN PATENT SPECIFICATION

(11) **EP 4 484 776 B1**
(45) Date of publication and mention of the grant of the patent: **11.11.2026**
(21) Application number: 23759703.4
(22) Date of filing: 09.02.2023
(51) Int. Cl.: F16C 11/06

(54) **DUST COVER AND BALL JOINT**
STAUBSCHUTZKAPPE UND KUGELGELENK
COUVERCLE ANTI-POUSSIÈRE ET JOINT À ROTULE

(30) Priority: 24.02.2022 JP 2022026452
(43) Date of publication of application: 01.01.2025
(73) Proprietor: NOK Corporation, Minato-ku Tokyo 105-8585 (JP)
(72) Inventor: SASAKI, Naoya, Makinohara-shi, Shizuoka 421-0532 (JP); HOSEN, Tatsuro, Makinohara-shi, Shizuoka 421-0532 (JP)
(74) Representative: Global IP Europe Patentanwaltskanzlei
(86) International application number: PCT/JP2023/004358
(87) International publication number: WO 2023/162699

(56) References cited:
- EP-A2- 2 295 824
- DE-A1- 102016 207 957
- JP-A- 2011 503 476
- JP-A- 2011 503 476
- JP-A- 2016 125 625
- US-A1- 2010 260 538
- US-A1- 2011 020 056
- US-B2- 6 913 409

## Description

### TECHNICAL FIELD

The present invention relates to dust covers and to ball joints.

### BACKGROUND ART

A ball joint is disposed in a variety of types of apparatuses such as automobiles, and the ball joint is provided with a dust cover for preventing infiltration of dust or moisture and leakage of lubricant. For example, Patent Document 1 discloses a configuration in which a ball joint is provided with an attachment member and a dust cover. The attachment member is an annular structure that includes a cylindrical portion surrounding a ball stud, an inclined portion inclined relative to the cylindrical portion, and a flange protruding outward from one end of the cylindrical portion. One end of the dust cover has an opening that is in contact with an outer circumferential surface of the cylindrical portion, with an outer circumferential surface of the inclined portion, and with a lower surface of the flange.

Patent document 2 relates to a joint and/or bearing arrangement with a joint pin whose head area can move relative to a receiving shell or housing unit, the joint pin being enclosed over at least part of its length by a surrounding sealing sleeve which, at its end axially remote from the head area is in direct or indirect sealing contact with the joint pin and for this comprises a clamping ring radially on the inside, is designed such that associated with the sealing sleeve in the area of its contact against the joint pin a second ring is positioned radially farther out, at least approximately parallel to the first clamping ring and with an axial extension component, which is connected by a radial connector to the first clamping ring to form a receiving unit of portal-shaped cross-section for an axial end area of the sealing sleeve.

Patent document 3 relates to a ball-and-socket joint for motor vehicles with a ball pivot, which comprises at least a joint ball accommodated rotatably and/or pivotably in a bearing shell of a housing and a pivot section, a sealing bellows, whose first edge area is fastened to the housing and whose second edge area has a sliding connection with a thrust ring, which is fixed on the pivot section and comprises an axial shoulder and a radial shoulder. The radial shoulder of the thrust ring forms a wave-shaped contour.

Patent document 4 relates to a sealing assembly of a ball joint, in particular for a vehicle, comprises a retaining ring which includes a ring axis and a radial ring flange having a flange upper side and an opposed flange lower side, and a sealing element which rests against the flange upper side and against the flange lower side and is exclusively connected to the retaining ring with an interlocking fit, the interlocking fit being configured such that the retaining ring and the sealing element are fixed to each other free of play in the axial and in the radial direction, and the flange upper side having an exposed contact surface for a sealing bellows.

### Related Art Document

### Patent Document

Patent Document 1: Japanese Patent Application Laid-Open Publication No. 2001-323923.
Patent Document 2: US 2010/260538 A1
Patent Document 3: US 6 913 409 B2
Patent Document 4: US 2011/020056 A1

### SUMMARY OF THE INVENTION

### Problem to be Solved by the Invention

However, in a technique disclosed by Patent Document 1, it is not easy to sufficiently apply a pressing force to the dust cover from the attachment member. Thus, there is possibility that a sealing property cannot be ensured sufficiently. In view of the above circumstances, an object of one aspect of this disclosure is to improve a sealing property of a dust cover.

### Means for Solving Problem

The above-mentioned object is solved by a dust cover defined in the appended independent claim. Further advantageous effects can be achieved by preferred embodiments defined in the appended dependent claims.

A dust cover according to one aspect of the present invention is a dust cover that includes an annular body and a cover, in which the annular body includes: a cylindrical portion including: a first end in a first direction along a central axis of the annular body; and a second end opposite to the first end; an annular first portion connected to the first end; and an annular second portion extending radially outward from the second end, an extending direction of the second portion being a direction extending from an outer circumferential surface of the cylindrical portion radially outward, in which the first portion includes an outer circumferential surface including a first surface inclined radially outward relative to the central axis, in which the first surface is a slope, an angle between the slope and the central axis being within a range of 1 degree or more and 15 degrees or less, in which the second portion includes a surface facing in the first direction, the surface of the second portion including a second surface, in which the second portion includes a surface facing in the first direction, the surface of the second portion including a second surface, in which the second surface is disposed in the first direction from a reference plane that is perpendicular to the central axis and that includes the second end, the second surface being at an angle greater than 0 degrees relative to the reference plane, in which the cover includes an annular sealing portion surrounding the cylindrical portion, and in which the sealing portion is in contact with the first surface and the second surface.

A ball joint according to another aspect of the present invention is a ball joint that includes a joint mechanism and any one of the dust covers mentioned above, in which the joint mechanism includes: a ball stud having one end having a spherical portion; and a bearing supporting the spherical portion.

### Effects of Invention

According to the present invention, it is possible to improve a sealing property of a dust cover.

### BRIEF DESCRIPTION OF THE DRAWINGS

Fig. 1 shows a cross section and a plan view of a ball joint according to an embodiment of the present invention.
Fig. 2 is an enlarged cross section of a portion of a dust cover in a vicinity of an annular body.
Fig. 3 is a cross section of the annular body.
Fig. 4 is a cross section explaining effects of this embodiment.
Fig. 5 is a cross section of a dust cover according to a modification.
Fig. 6 is a cross section of a dust cover according to another modification.
Fig. 7 is a cross section of a dust cover according to yet another modification.
Fig. 8 is a cross section of a dust cover according to yet another modification.
Fig. 9 is a cross section of a dust cover according to yet another modification.
Fig. 10 is a cross section of a dust cover according to yet another modification.
Fig. 11 is a cross section of a dust cover according to yet another modification.
Fig. 12 is a cross section of a dust cover according to yet another modification.
Fig. 13 is a cross section of a dust cover according to yet another modification.

### MODES FOR CARRYING OUT THE INVENTION

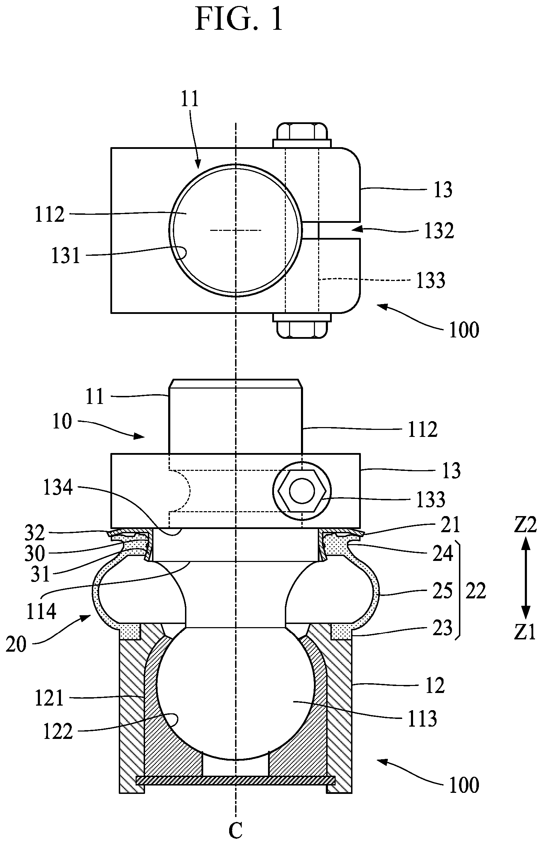

Fig. 1 shows a cross section and a plan view of a configuration of a ball joint 100 according to a preferred embodiment of the present invention. The ball joint 100 according to this embodiment is used for a variety of apparatuses such as suspension or steering of an automobile, for example. As shown in Fig. 1, the ball joint 100 includes a joint mechanism 10 and a dust cover 20.

In the following description, a central axis C of the ball joint 100 is assumed. A direction along the central axis C is denoted as a direction Z1, and a direction opposite to the direction Z1 is denoted as a direction Z2. The direction Z1 is an example of a "first direction," and the direction Z2 is an example of a "second direction." The direction Z1 is, for example, a downward direction along a vertical direction, and the direction Z2 is, for example, an upward direction along the vertical direction. However, a direction in which the ball joint 100 is disposed is not limited to the above example, and the direction may be freely selected.

A direction of a circumference of a virtual circle that has a freely selected diameter and a center disposed at the central axis C is denoted as a "circumferential direction," and a direction of a radius of the virtual circle is denoted as a "radial direction." A direction along the radial direction and toward the central axis C is denoted as an "inward direction", a direction along the radial direction and opposite to a direction toward the central axis C is denoted as an "outward direction."

As shown in Fig. 1, the joint mechanism 10 includes a ball stud 11, a socket 12, and a knuckle 13. The ball stud 11 includes a shaft 112 and a spherical portion 113. The shaft 112 is a rod-shaped member. The shaft 112 includes a mounting portion 114. The mounting portion 114 is a cylindrical or annular portion that has a diameter greater than that of the other portion of the shaft 112. In other words, the mounting portion 114 is a flange protruding radially outward from an outer circumferential surface of the other portion of the shaft 112. The spherical portion 113 is disposed at one end of the shaft 112. As will be understood from the above description, the ball stud 11 is a structure that has one end having the spherical portion 113.

The socket 12 supports the ball stud 11. Specifically, the socket 12 includes a bearing 121 supporting the spherical portion 113. The bearing 121 is provided with a bearing surface 122. The bearing surface 122 is a recessed spherical surface that has an inner diameter slightly greater than an outer diameter of the spherical portion 113. In a state in which a surface of the spherical portion 113 is in contact with the bearing surface 122, the ball stud 11 is supported by the bearing 121. A gap between the surface of the spherical portion 113 and the bearing surface 122 is filled with lubricant. Thus, the ball stud 11 is supported by the bearing 121 to be rotatable and swingable.

The knuckle 13 is a structure fixed to a portion of the shaft 112, and between the portion of the shaft 112 and the spherical portion 113, the mounting portion 114 is interposed. In other words, the mounting portion 114 is interposed between the spherical portion 113 and the knuckle 13. The knuckle 13 is a plate-shaped member provided with a mounting hole 131 and a slit 132. The mounting hole 131 is a through hole in which the shaft 112 is inserted. The slit 132 extends radially from the mounting hole 131. In the knuckle 13, a bolt 133 is inserted across the slit 132. In a state in which the shaft 112 is inserted in the mounting hole 131, the knuckle 13 is tightened by the bolt 133 to be fixed to the shaft 112. In other words, the ball joint 100 according to this embodiment is of a pinch bolt type. In the ball joint 100 of a pinch bolt type, an outer diameter of a portion of the mounting portion 114 that is perpendicular to the central axis C is the same as that of each of the other portions of the mounting portion 114 that is perpendicular to the central axis C.

The dust cover 20 is disposed on the joint mechanism 10 so as to prevent adhesion of dust or moisture to a joint of the spherical portion 113 and the bearing 121 and so as to prevent leakage of lubricant applied to the joint. As shown in Fig. 1, the dust cover 20 includes an annular body 21 and a cover 22. The annular body 21 and the cover 22 are disposed to surround the ball stud 11.

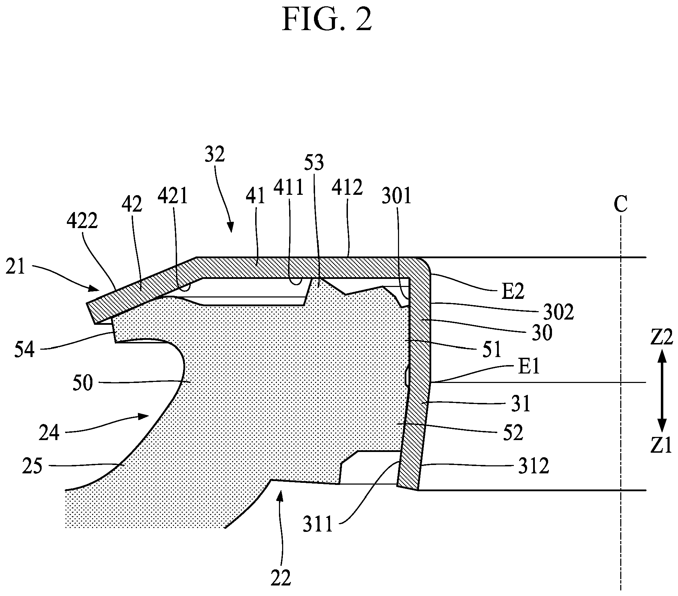

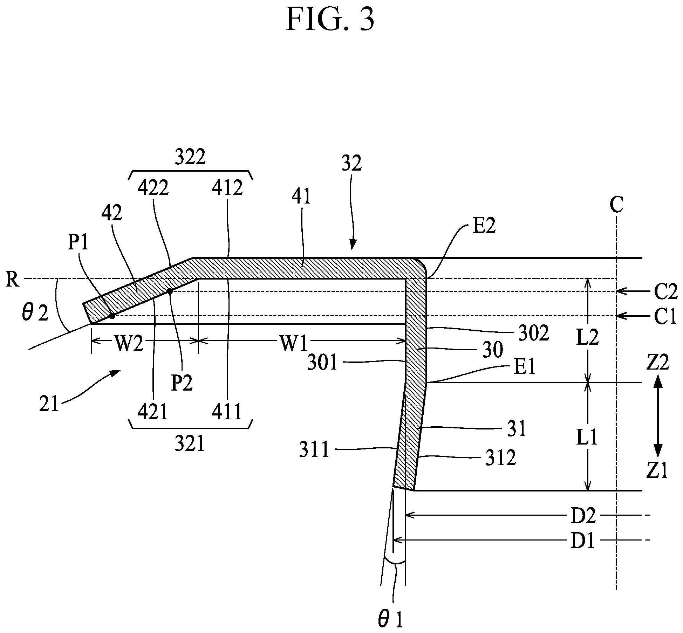

Fig. 2 is an enlarged cross section of a portion of the dust cover 20 in a vicinity of the annular body 21. Fig. 3 is a cross section of the annular body 21.

The annular body 21 is an annular ferrule ring surrounding the ball stud 11. The annular body 21 is a rigid structure made of a metallic material such as stainless steel, for example. The central axis C described above corresponds to a central axis of the annular body 21. In the ball joint 100 of a pinch bolt type described above, dust or moisture may infiltrate into the socket 12 through the slit 132 included in the knuckle 13. By the annular body 21 being provided, it is possible to substantially prevent infiltration of dust or moisture through the slit 132. Thus, it is possible to substantially prevent occurrence of rust on the ball stud 11 or on the knuckle 13, for example.

The annular body 21 includes a cylindrical portion 30, a first portion 31, and a second portion 32. The cylindrical portion 30, the first portion 31, and the second portion 32 are integrally formed by press-molding a metallic plate having a predetermined thickness, for example. The cylindrical portion 30, the first portion 31, and the second portion 32 have the same thickness. However, the annular body 21 may have portions that have different thicknesses.

The cylindrical portion 30 is a cylindrical portion surrounding the mounting portion 114 of the ball stud 11. The cylindrical portion 30 includes an outer circumferential surface 301 and an inner circumferential surface 302. An inner diameter of the cylindrical portion 30 is substantially the same as an outer diameter of the mounting portion 114. As shown in Fig. 1, the cylindrical portion 30 is fitted to the mounting portion 114. In other words, in a state in which the inner circumferential surface 302 of the cylindrical portion 30 and an outer circumferential surface of the mounting portion 114 are in close contact with each other, the cylindrical portion 30 is fixed to the mounting portion 114. Thus, the annular body 21 rotates in conjunction with rotation of the ball stud 11. As shown in Fig. 2 and Fig. 3, the cylindrical portion 30 includes a first end E1 and a second end E2. The first end E1 is an end portion of the cylindrical portion 30 in the direction Z1, and the second end E2 is an end portion of the cylindrical portion 30 in the direction Z2.

The first portion 31 is an annular portion connected to the first end E1. In other words, the first portion 31 extends from the cylindrical portion 30 in the direction Z1. As shown in Fig. 3, a size L1 of the first portion 31 in a direction along the central axis C is substantially the same as a size L2 of the cylindrical portion 30 in the direction along the central axis C. For example, the size L1 and the size L2 are about 1 mm. However, a configuration is assumed in which the size L1 of the first portion 31 is greater than the size L2 of the cylindrical portion 30, or alternatively, a configuration is assumed in which the size L1 of the first portion 31 is less than the size L2 of the cylindrical portion 30.

The first portion 31 includes an outer circumferential surface (hereinafter referred to as a "first surface") 311 and an inner circumferential surface 312. The first surface 311 is continuous with the outer circumferential surface 301 of the cylindrical portion 30, and the inner circumferential surface 312 is continuous with the inner circumferential surface 302 of the cylindrical portion 30. As shown in Fig. 1, the first portion 31, together with the cylindrical portion 30, surrounds the mounting portion 114 of the ball stud 11. In other words, the inner circumferential surface 312 of the first portion 31 faces the outer circumferential surface of the mounting portion 114.

As shown in Fig. 2 and Fig. 3, the first portion 31 is inclined relative to the central axis C. In other words, the first portion 31 is a frustoconical portion bent from the cylindrical portion 30. Specifically, as shown in Fig. 3, the first portion 31 has a tapered shape such that an outer diameter D1 of an end portion of the first portion 31 in the direction Z1 is greater than an outer diameter D2 of an end portion of the first portion 31 in the direction Z2. Thus, the first surface 311 of the first portion 31 is inclined radially outward relative to the outer circumferential surface 301 of the cylindrical portion 30. According to the invention, the first surface 311 is a slope that is inclined at an angle θ1 relative to the central axis C. The angle θ1 is set to an angle within a range of 1 degree or more and 15 degrees or less. In a further preferred embodiment, the angle θ1 is set to an angle within a range of 1 degree or more and 5 degrees or less. Similarly, the inner circumferential surface 312 of the first portion 31 is inclined at the angle θ1 relative to the central axis C. In other words, the inner circumferential surface 312 is inclined at the angle θ1 relative to the inner circumferential surface 302 of the cylindrical portion 30. Thus, the inner circumferential surface 312 faces the outer circumferential surface of the mounting portion 114 across a space.

The second portion 32 is an annular flange extending radially outward from the second end E2 of the cylindrical portion 30, an extending direction of the second portion 32 being a direction extending from the outer circumferential surface 301 of the cylindrical portion 30 radially outward. The second portion 32 is a plate-shaped portion that includes a sealing surface 321 and an opposite surface 322. The sealing surface 321 is a surface of the second portion 32 in the direction Z1. The opposite surface 322 is a surface of the second portion 32 in the direction Z2. In other words, the sealing surface 321 and the opposite surface 322 are opposite to each other. As will be understood from Fig. 1, the opposite surface 322 of the second portion 32 faces a lower surface 134 of the knuckle 13. As shown in Fig. 2 and Fig. 3, the second portion 32 includes a first annular portion 41 and a second annular portion 42.

The first annular portion 41 is a portion extending outwardly from the second end E2 of the cylindrical portion 30, an extending direction of the first annular portion 41 being perpendicular to the central axis C. In other words, an inner periphery of the first annular portion 41 is connected to the second end E2 of the cylindrical portion 30, and the first annular portion 41 protrudes radially outward from the outer circumferential surface 301 of the cylindrical portion 30. The first annular portion 41 is a plate-shaped portion that includes a lower surface 411 and an upper surface 412. The lower surface 411 is a surface of the first annular portion 41 in the direction Z1. The upper surface 412 is a surface of the first annular portion 41 in the direction Z2. As will be understood from Fig. 1, the upper surface 412 of the first annular portion 41 is in contact with the lower surface 134 of the knuckle 13.

Fig. 3 shows a reference plane R. The reference plane R is a virtual plane that is perpendicular to the central axis C and that includes the second end E2 of the cylindrical portion 30. The lower surface 411 and the upper surface 412 of the first annular portion 41 are each a plane that is parallel to the reference plane R. In other words, the lower surface 411 and the upper surface 412 of the first annular portion 41 are perpendicular to the outer circumferential surface 301 of the cylindrical portion 30. As will be understood from Fig. 3, the lower surface 411 of the first annular portion 41 is included within the reference plane R.

The second annular portion 42 is an annular portion surrounding the first annular portion 41. In other words, an inner circumference of the second annular portion 42 is connected to an outer circumference of the first annular portion 41. A size W2 of the second annular portion 42 in the radial direction is less than a size W1 of the first annular portion 41 in the radial direction. However, a configuration is assumed in which the size W1 of the first annular portion 41 is substantially the same as the size W2 of the second annular portion 42, or alternatively, a configuration is assumed in which the size W2 of the second annular portion 42 is greater than the size W1 of the first annular portion 41.

The second annular portion 42 includes a lower surface (hereinafter referred to as a "second surface") 421 and an upper surface 422. The second surface 421 is a surface of the second annular portion 42 in the direction Z1. The upper surface 422 is a surface of the second annular portion 42 in the direction Z2. As will be understood from the above description, the sealing surface 321 of the second portion 32 includes the lower surface 411 of the first annular portion 41 and the second surface 421 (lower surface) of the second annular portion 42. The second surface 421 is continuous with the lower surface 411 of the first annular portion 41. The opposite surface 322 of the second portion 32 includes the upper surface 412 of the first annular portion 41 and the upper surface 422 of the second annular portion 42.

The second annular portion 42 is disposed in the direction Z1 from the reference plane R. Specifically, the second annular portion 42 extends in a direction intersecting the reference plane R. In other words, the second annular portion 42 is a frustoconical portion that is inclined relative to the first annular portion 41 by being bent to the first annular portion 41. In Fig. 3, a first point P1 and a second point P2 are shown. The first point P1 and the second point P2 are each a point included in the second surface 421. The second point P2 is a point closer to the first annular portion 41 than the first point P1. Specifically, the second point P2 according to this embodiment is disposed in an inward direction along a direction of diameter of the second portion 32 from the first point P1. The first point P1 may be a point on an outer circumference of the second annular portion 42. The second point P2 may be a point on the inner circumference of the second annular portion 42.

As shown in Fig. 3, the second surface 421 is inclined relative to the reference plane R such that a location C1 of the first point P1 on the central axis C is disposed in the direction Z1 from a location C2 of the second point P2 on the central axis C. In other words, as viewed from the second end E2, the second surface 421 is inclined relative to the reference plane R in the direction Z1. Thus, the second surface 421 is disposed in the direction Z1 from the reference plane R. As described above, the sealing surface 321 of the second portion 32 includes the second surface 421 that is inclined relative to the reference plane R in the direction Z1.

The second surface 421 of the second annular portion 42 is inclined at an angle θ2 relative to the reference plane R. The angle θ2 is freely selected and, for example, the angle θ2 is set to an angle within a range of 1 degree or more and 90 degrees or less. In a further preferred embodiment, the angle θ2 is set to an angle within a range of 1 degree or more and 45 degrees or less. Similarly, the upper surface 422 of the second annular portion 42 is inclined at the angle θ2 relative to the reference plane R. Thus, the upper surface 422 of the second annular portion 42 faces the lower surface 134 of the knuckle 13 across a space.

The cover 22 shown in Fig. 1 is a cylindrical member made of an elastic material. The cover 22 is provided to surround the ball stud 11. Examples of a material of the cover 22 include various rubber materials such as chloroprene rubber (CR), polyurethane rubber (PUR), epichlorohydrin rubber (ECO), nitrile rubber (NBR), or styrene rubber (SBR). As shown in Fig. 1, the cover 22 according to this embodiment is a cylindrical elastic film that is constituted of a fixing portion 23, a sealing portion 24, and a body portion 25 that are integrally formed.

The fixing portion 23 is an annular portion that constitutes one end of the cover 22 in the direction along the central axis C. The fixing portion 23 is fixed to the socket 12. On the other hand, the sealing portion 24 constitutes the other end of the cover 22 in the other direction along the central axis C. The body portion 25 is a portion that is interposed between the fixing portion 23 and the sealing portion 24. The body portion 25 is elastically deformed in conjunction with swinging of the ball stud **11** relative to the socket 12.

As shown in Fig. 2, the sealing portion 24 of the cover 22 is an annular portion surrounding the cylindrical portion 30 and the first portion 31 of the annular body 21. When the annular body 21 rotates in conjunction with the ball stud 11, the sealing portion 24 does not rotate. In other words, the sealing portion 24 slides on the annular body 21. However, a portion of the sealing portion 24 of the cover 22 may be deformed to be twisted in conjunction with rotation or swinging of the ball stud 11.

The sealing portion 24 is an annular structure that is constituted of a main body portion 50, a first lip portion 51, a second lip portion 52, a third lip portion 53, and a fourth lip portion 54 that are integrally formed. The main body portion 50 is an annular portion surrounding the cylindrical portion 30. The first lip portion 51 and the second lip portion 52 are each an annular protrusion that is formed on an inner circumferential surface of the main body portion 50, the annular protrusion extending in the circumferential direction. In other words, the first lip portion 51 and the second lip portion 52 protrude radially inward from the inner circumferential surface of the main body portion 50. The second lip portion 52 is disposed in the direction Z1 from the first lip portion 51. As shown in Fig. 2, the first lip portion 51 is in contact with the outer circumferential surface 301 of the cylindrical portion 30, and the second lip portion 52 is in contact with the first surface 311 (outer circumferential surface) of the first portion 31. In other words, the first lip portion 51 is pressed by the outer circumferential surface 301 of the cylindrical portion 30, and the second lip portion 52 is pressed by the first surface 311 of the first portion 31.

The third lip portion 53 and the fourth lip portion 54 are each an annular protrusion that is formed on an upper surface of the main body portion 50 facing the second portion 32, the annular protrusion extending in the circumferential direction. The third lip portion 53 and the fourth lip portion 54 protrude from the upper surface of the main body portion 50. The third lip portion 53 is disposed in the inward direction from the fourth lip portion 54. The third lip portion 53 is in contact with the lower surface 411 of the first annular portion 41, and the fourth lip portion 54 is in contact with the second surface 421 of the second annular portion 42. In other words, the third lip portion 53 is pressed by the lower surface 411 of the first annular portion 41, and the fourth lip portion 54 is pressed by the second surface 421 of the second annular portion 42.

As will be understood from the above description, the sealing portion 24 is in contact with the outer circumferential surface 301 of the cylindrical portion 30, the first surface 311 of the first portion 31, and the sealing surface 321 of the second portion 32 (the lower surface 411 of the first annular portion 41 and the second surface 421 of the second annular portion 42). Due to a configuration in which the first surface 311 is inclined relative to the central axis C and the second surface 421 is inclined relative to the reference plane R, the first surface 311 and the second surface 421 face each other across the sealing portion 24.

As described above, this embodiment includes a configuration (hereinafter referred to as a "first configuration") in which the first surface 311 is inclined relative to the central axis C, and a configuration (hereinafter referred to as a "second configuration") in which the second surface 421 is disposed in the direction Z1 from the reference plane R. According to the first configuration, compared to a configuration in which the first surface 311 is parallel to the central axis C, a contact pressure acting on the sealing portion 24 from the first surface 311 is increased. Thus, it is possible to improve a sealing property caused by contact between the first surface 311 and the sealing portion 24. According to the second configuration, compared to a configuration in which the second surface 421 is parallel to the reference plane R, a contact pressure acting on the sealing portion 24 from the second surface 421 is increased. Thus, it is possible to improve a sealing property caused by contact between the second surface 421 and the sealing portion 24. In this embodiment, the fourth lip portion 54 of the sealing portion 24 is in contact with the second surface 421; thus, compared to a configuration in which the main body portion 50 is in contact with the second surface 421, the above-described effect of improving the sealing property is particularly significant.

According to this embodiment including both the first configuration and the second configuration, the sealing portion 24 of the cover 22 is pressed by both the first surface 311 of the first portion 31 and the second surface 421 of the second portion 32 of the annular body 21. In the first configuration, the first surface 311 is inclined radially outward relative to the outer circumferential surface 301 of the cylindrical portion 30; thus, a radial component of a pressing force acting on the sealing portion 24 from the first surface 311 faces radially outward. In the second configuration, the second surface 421 is disposed in the direction Z1 from the reference plane R; thus, a radial component of a pressing force acting on the sealing portion 24 from the second surface 421 faces radially inward. In other words, the sealing portion 24 is sandwiched in the radial direction by the first surface 311 and second surface 421. As described above, according to this embodiment including both the first configuration and the second configuration, compared to a configuration in which the annular body 21 includes only one of the first portion 31 and the second portion 32, the sealing portion 24 is stably held, thereby improving a sealing property caused by the sealing portion 24.

A comparative example for this embodiment including both the first configuration and the second configuration is assumed in which only the second configuration is included. In the comparative example, the second surface 421 is disposed in the direction Z1 from the reference plane R, but the first portion 31 is a cylinder having the same diameter as the cylindrical portion 30. In the comparative example, the contact pressure acting on the sealing portion 24 from the second surface 421 can be increased by the second configuration, but the sealing portion 24 moves in the direction Z1 by pressing caused by the second surface 421; as a result, the sealing property may be degraded. In a low temperature environment, flexibility of the cover 22 is reduced; thus, it is difficult for deformation of the cover 22 to follow swinging of the ball stud 11. In other words, in a low temperature environment, a problem is particularly significant in that falling off of the sealing portion 24 causes degradation of the sealing property.

In contrast to the above comparative example, this embodiment includes both the first configuration and the second configuration. Due to the second configuration being included, a contact pressure acting on the sealing portion 24 from the second surface 421 is increased. On the other hand, due to the first configuration, the first surface 311 supports the sealing portion 24 from below; thus, it is possible to substantially prevent falling off of the sealing portion 24. In other words, according to this embodiment, compared to a configuration in which either the first configuration or the second configuration is included, an interactive combination of the first configuration and the second configuration can provide a significant effect in that the sealing portion 24 can be stably held.

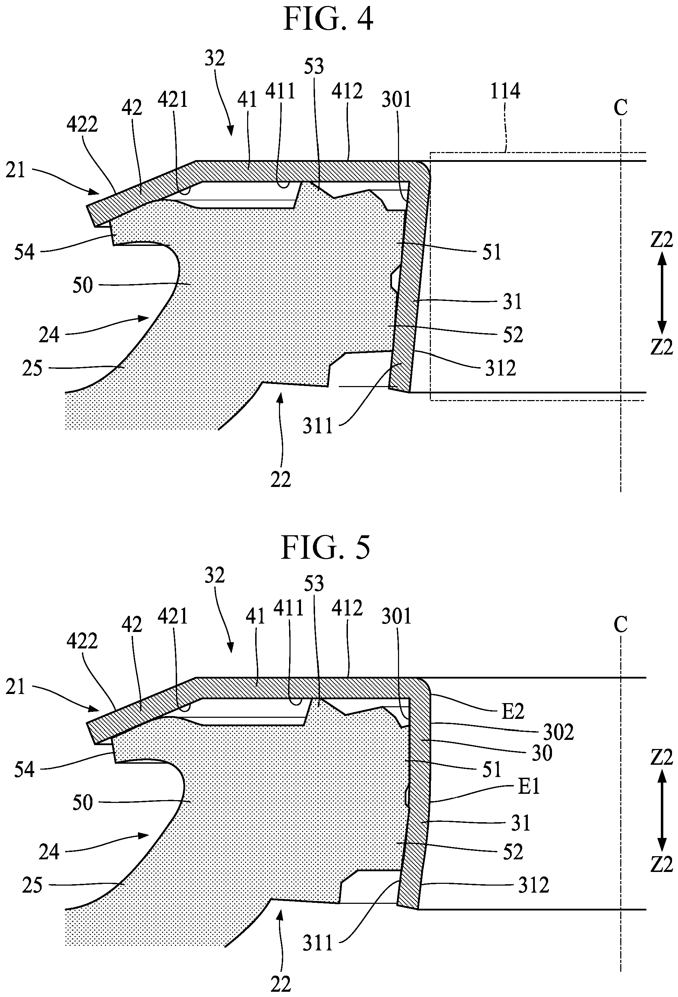

In a state in which only prevention of falling off of the sealing portion 24 is taken into consideration, it is desirable to sufficiently ensure an area of the first surface 311 in the first configuration. For example, as shown in Fig. 4, a configuration in which the cylindrical portion 30 is omitted is assumed. However, in the configuration in which the cylindrical portion 30 is omitted, it is difficult to fit the mounting portion 114 in the annular body 21. In other words, it is impossible to firmly fix the annular body 21 to the mounting portion 114. If the outer circumferential surface of the mounting portion 114 has a tapered shape so as to be in close contact with the first surface 311, it is possible to firmly fix the annular body 21 to the mounting portion 114. However, as shown by a long dashed double-short dashed line in Fig. 4, the above-described ball joint 100 of a pinch bolt type typically has a configuration in which an outer diameter of a portion of the mounting portion 114 that is perpendicular to the central axis C is the same as that of each of the other portions of the mounting portion 114 that is perpendicular to the central axis C. In view of the above circumstances, this embodiment includes a configuration in which the annular body 21 includes the cylindrical portion 30 in addition to the first portion 31. According to the above configuration, by the inner circumferential surface 302 of the cylindrical portion 30 being in close contact with the outer circumferential surface of the mounting portion 114, the annular body 21 is fitted to the mounting portion 114. Thus, an advantage is obtained in that the first surface 311 of the first portion 31 substantially prevents falling off of the sealing portion 24, and the annular body 21 can be firmly fixed to the mounting portion 114 due to the cylindrical portion 30.

### B: Modifications

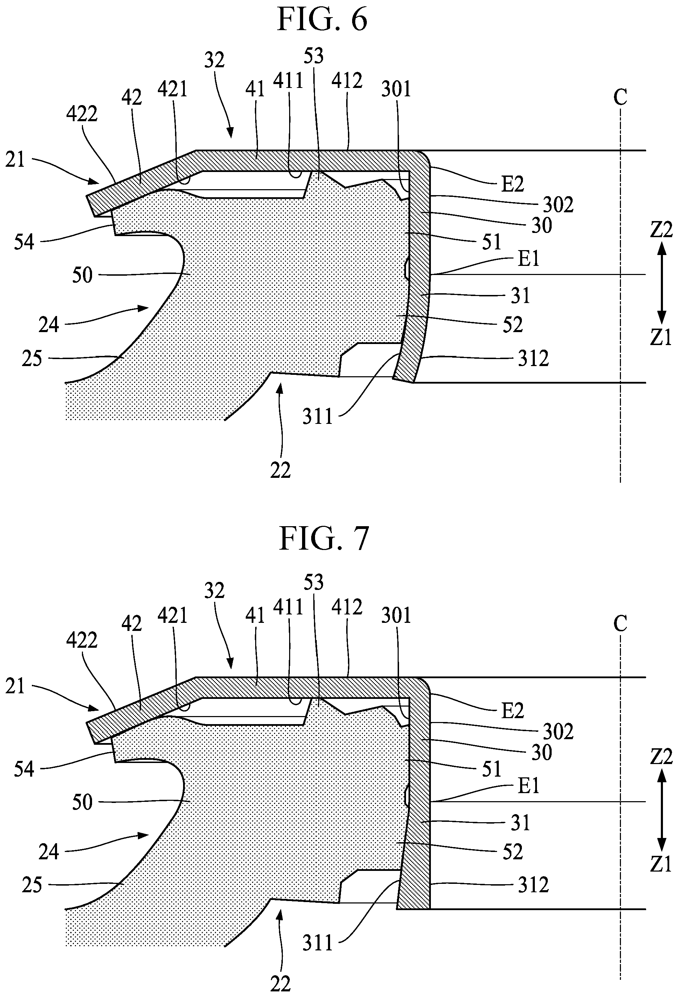

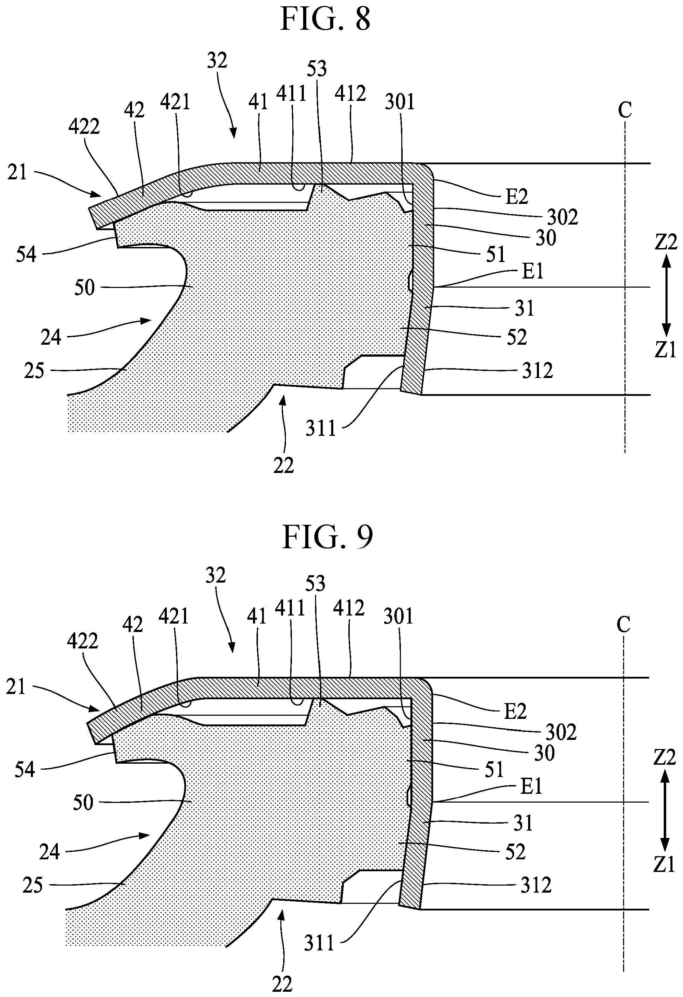

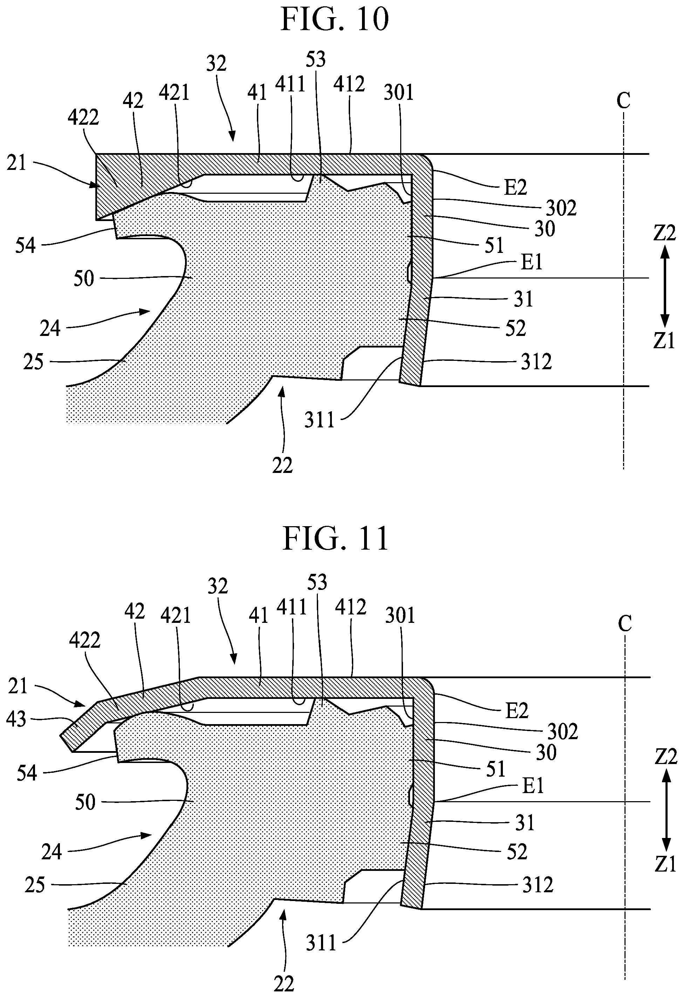

Specific modifications that may be applied to each of the modes described above are described below. Two or more modifications freely selected from the following modifications may be combined as long as the combination remains within the scope of the appended claims and no conflict arises from such combination.
(1) A shape of the first portion 31 is not limited to the shape shown in the above-described embodiment. For example, in the above-described embodiment, a configuration is described in which the first portion 31 is bent to the cylindrical portion 30; however, as shown in Fig. 5, a configuration is assumed in which the first portion 31 is curved from the cylindrical portion 30. In other words, a clear boundary between the cylindrical portion 30 and the first portion 31 (folding line) may not be required. In the above-described embodiment, a configuration is described in which a generating line of the first portion 31 is a straight line; however, as shown in Fig. 6, a configuration is assumed in which a generating line of the first surface 311 is a curve. In other words, the generating line of the first surface 311 and a generating line of the inner circumferential surface 312 of the first portion 31 may each be a curve. In the above-described embodiment, a configuration is described in which both the first surface 311 and the inner circumferential surface 312 of the first portion 31 are inclined relative to the cylindrical portion 30; however, as shown in Fig. 7, the inner circumferential surface 312 of the first portion 31 may be a cylindrical surface parallel to the central axis C. In the configuration shown in Fig. 7, a thickness of a portion of the first portion 31 closer to an end of the first portion 31 in the direction Z1 is greater than a thickness of a portion of the first portion 31 farther from the end of the first portion 31 in the direction Z1.
(2) A shape of the second annular portion 42 is not limited to the shape shown in the above-described embodiment. For example, in the above-described embodiment, a configuration is described in which the second annular portion 42 is bent to the first annular portion 41; however, as shown in Fig. 8, a configuration is assumed in which the second annular portion 42 is curved from the first annular portion 41. In other words, a clear boundary between the first annular portion 41 and the second annular portion 42 (folding line) may not be required. In the above-described embodiment, a configuration is described in which a generating line of the second annular portion 42 is a straight line; however, as shown in Fig. 9, a configuration is assumed in which the generating line of the second annular portion 42 is a curve. In other words, a generating line of the second surface 421 and a generating line of the upper surface 422 of the second annular portion 42 may each be a curve. In the above-described embodiment, a configuration is described in which both the second surface 421 and the upper surface 422 of the second annular portion 42 are inclined relative to the first annular portion 41; however, as shown in Fig. 10, the upper surface 422 of the second annular portion 42 may be a surface perpendicular to the central axis C. In the configuration shown in Fig. 10, a thickness of a portion of the second annular portion 42 closer to a radially outward end of the second annular portion 42 is greater than a thickness of a portion of the second annular portion 42 closer to a radially inward end of the second annular portion 42.

As shown in Fig. 11, the second portion 32 may include a third annular portion 43 surrounding the second annular portion 42. In other words, the second portion 32 may be bent at two or more points. As will be understood from Fig. 11, the second annular portion 42 including the second surface 421 may not be an outermost peripheral portion of the second portion 32.

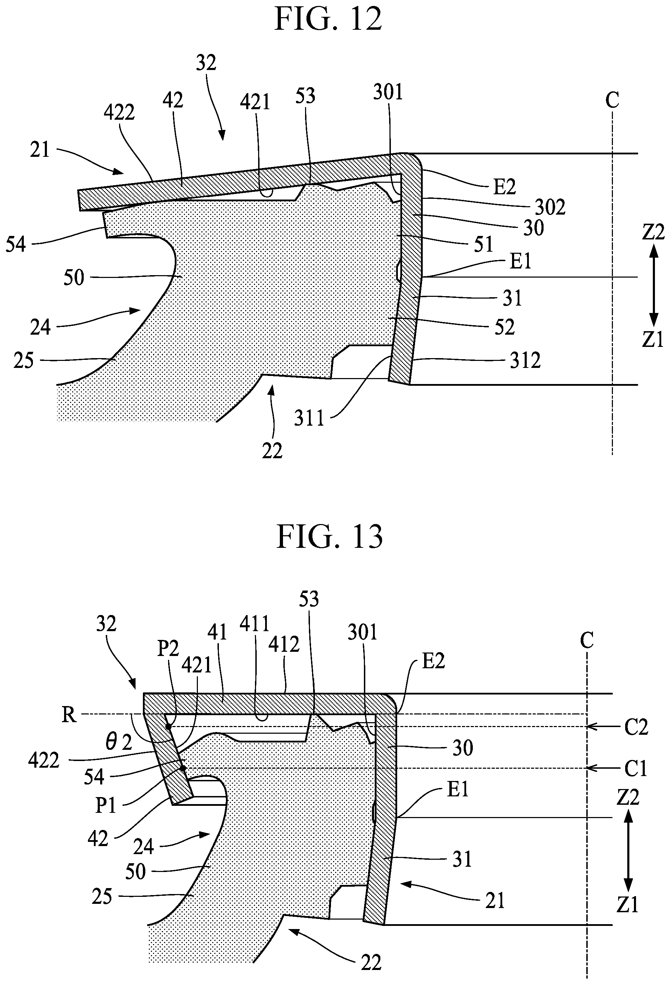

(3) In the above-described embodiment, a configuration is described in which the second portion 32 includes the first annular portion 41; however, as shown in Fig. 12, the first annular portion 41 may be omitted. In the configuration shown in Fig. 12, the second annular portion 42 is directly connected to the cylindrical portion 30. As will be understood from the above description, the first annular portion 41 may or may not be included as long as the second portion 32 includes the second surface 421 in which the location C1 of the first point P1 on the central axis C is disposed in the direction Z1 from the location C2 of the second point P2.

However, according to the above-described embodiment in which the second portion 32 includes the first annular portion 41 and the second annular portion 42, the upper surface 412 of the first annular portion 41 can be in contact with the lower surface 134 of the knuckle 13. Thus, an advantage is obtained in that the annular body 21 can be stably held compared to the configuration shown in Fig. 12. According to the configuration in which the second portion 32 includes the first annular portion 41, it is possible to sufficiently ensure an area in which the second portion 32 and the knuckle 13 are in contact with each other. Thus, it is possible to reduce the probability that dust or moisture will infiltrate into a gap between the annular body 21 and the knuckle 13.

(4) In the above-described embodiment, a configuration is described in which the angle θ1 of the first surface 311 relative to the central axis C is within the range of 1 degree or more and 15 degrees or less.

By inserting the cylindrical portion 30 and the first portion 31 of the annular body 21 into an opening of the sealing portion 24, the annular body 21 and the cover 22 are mounted to each other. In a configuration in which the first surface 311 is inclined relative to the central axis C, the cylindrical portion 30 and the first portion 31 of the annular portion 21 is inserted into the opening of the sealing portion 24 in a state in which an inner diameter of the sealing portion 24 is elastically expanded to be greater than the outer diameter D1 of an end portion of the first portion 31 in the direction Z1. In a configuration in which the angle θ1 of the first surface 311 is excessively large, it is necessary to expand the inner diameter of the sealing portion 24 large for mounting the annular body 21 and the sealing portion 24 to each other. According to the invention in which the angle θ1 of the first surface 311 is within the range of 1 degree or more and 15 degrees or less, in a step of mounting the sealing portion 24 to the annular body 21, it is not necessary to excessively expand the inner diameter of the sealing portion 24. Thus, an advantage is obtained in that it is possible to readily insert the cylindrical portion 30 and the first portion 31 of the annular body 21 into the opening of the sealing portion 24.

(5) In the above-described embodiment, a configuration is described in which the angle θ2 of the second surface 421 relative to the reference plane R is within the range of 1 degree or more and 90 degrees or less; however, the angle θ2 is not limited to the above example. For example, as shown in Fig. 13, a configuration is assumed in which the second surface 421 is inclined at an angle θ2 greater than 90 degrees relative to the reference plane R. In Fig. 13, the first point P1 and the second point P2 included in the second surface 421 are shown. The second point P2 is closer to the first annular portion 41 than the first point P1. As will be understood from Fig. 13, in a configuration in which the angle θ2 is greater than 90 degrees, the location C1 of the first point P1 on the central axis C is disposed in the direction Z1 from the location C2 of the second point P2 on the central axis C. A configuration in which the fourth lip portion 54 is in contact with the second surface 421 is the same as that in the above-described embodiment.

Similarly to the above-described embodiment, the configuration shown in Fig. 13 corresponds to the above-described second configuration in which the second surface 421 is disposed in the direction Z1 from the reference plane R. Thus, a radial component of a pressing force acting on the sealing portion 24 from the second surface 421 faces radially inward. In other words, the sealing portion 24 is sandwiched in the radial direction by the first surface 311 and second surface 421. Thus, similarly to the above-described embodiment, the sealing portion 24 is stably held thereby improving the sealing property caused by the sealing portion 24.

According to the configuration in which the angle θ2 of the second surface 421 is within the range of 1 degree or more and 90 degrees or less, a component along a direction of the central axis C of the pressing force acting on the sealing portion 24 from the second surface 421 faces in the direction Z1. On the other hand, a component along the direction of the central axis C of the pressing force acting on the sealing portion 24 from the first surface 311 faces in the direction Z2. In other words, the sealing portion 24 is sandwiched in the direction of the central axis C by the first surface 311 and the second surface 421. Thus, compared to the configuration in which the angle θ2 of the second surface 421 is greater than 90 degrees, an advantage is obtained in that the sealing portion 24 is stably held, thereby improving the sealing property caused by the sealing portion 24.

On the other hand, according to the configuration in which the angle θ2 is greater than 90 degrees as shown in Fig. 13, a component along the direction of the central axis C of a pressing force acting on the sealing portion 24 from the second surface 421 faces in the direction Z2. Thus, compared to a configuration in which the angle θ2 is less than 90 degrees, an effect of prevention of falling off of the sealing portion 24 is obtained not only by the first surface 311, but also by the second surface 421. As a result, for example, in a configuration in which the angle θ1 of the first surface 311 cannot be ensured sufficiently, an advantage is obtained in which the sealing portion 24 can be stably held by the second surface 421. In other words, it is possible to reduce the angle θ1 of the first surface 311 necessary to stably hold the sealing portion 24. As a result of the angle θ1 being reduced, in the step of mounting the sealing portion 24 to the annular body 21, it is not necessary to excessively expand the inner diameter of the sealing portion 24. Thus, an advantage is obtained in that it is possible to readily mount the sealing portion 24 to the annular body 21.

### Description of Reference Signs

100... ball joint, 10... joint mechanism, 11... ball stud, 112... shaft, 113... spherical portion, 114... mounting portion, 12... socket, 121... bearing, 122... bearing surface, 13... knuckle, 131... mounting hole, 132... slit, 133... bolt, 20... dust cover, 21... annular body, 22... cover, 30... cylindrical portion, 301... outer circumferential surface, 302... inner circumferential surface, 31... first portion, 311... first surface, 312... inner circumferential surface, 32... second portion, 41... first annular portion, 411... lower surface, 412... upper surface, 42... second annular portion, 421... second surface, 422... top surface.

## Claims

1. A dust cover (20) for a ball joint (100) comprising:
an annular body (21); and
a cover (22),
wherein the annular body (21) includes:
a cylindrical portion (30) including:
a first end (E1) in a first direction (Z1) along a central axis (C) of the annular body (21); and
a second end (E2) opposite to the first end (E1);
an annular first portion (31) connected to the first end (E1); and
an annular second portion (32) extending radially outward from the second end (E2), an extending direction of the second portion (32) being a direction extending from an outer circumferential surface (301) of the cylindrical portion (30) radially outward,
wherein the annular first portion (31) includes an outer circumferential surface including a first surface (311) inclined radially outward relative to the central axis (C),
wherein the first surface (311) is a slope, an angle (θ1) between the slope and the central axis (C) being within a range of 1 degree or more and 15 degrees or less,
wherein the annular second portion (32) includes a surface (321) facing in the first direction (Z1), the surface (321) of the second portion (32) including a second surface (421),
wherein the second surface (421) is disposed in the first direction (Z1) from a reference plane (R) that is perpendicular to the central axis (C) and that includes the second end (E2), the second surface (421) being at an angle (θ2) greater than 0 degrees relative to the reference plane (R),
wherein the cover (22) includes an annular sealing portion (24) surrounding the cylindrical portion (30), and
wherein the annular sealing portion (24) is in contact with the first surface (311) and the second surface (421).

2. The dust cover (20) according to claim 1,
wherein the annular second portion (32) includes:
a first annular portion (41) extending outwardly from the second end (E2), an extending direction of the first annular portion (41) being perpendicular to the central axis (C); and
a second annular portion (42) surrounding the first annular portion (41), and
wherein the second surface (421) is continuous with a surface (411) of the first annular portion (41) facing the first direction (Z1).

3. The dust cover (20) according to claim 1 or 2, wherein the second surface (421) is a slope, an angle (θ2) between the slope and the reference plane (R) being within a range of 1 degree or more and 90 degrees or less.

4. The dust cover (20) according to any one of claims 1 to 3,
wherein the annular sealing portion (24) includes:
an annular main body portion (50) surrounding the cylindrical portion (30); and
a lip portion (54) protruding from a surface of the main body portion (50) facing the second portion (42), and
wherein the lip portion (54) is in contact with the second surface (421).

5. A ball joint (100) comprising:
a joint mechanism (10); and
a dust cover (20) according to anyone of claims 1 to 4,
wherein the joint mechanism (10) includes:
a ball stud (11) having one end having a spherical portion (113); and
a bearing (121) supporting the spherical portion (113).

## Patentansprüche

1. Staubabdeckung (20) für ein Kugelgelenk (100), die aufweist:
einen ringförmigen Körper (21); und
eine Abdeckung (22),
wobei der ringförmige Körper (21) aufweist:
einen zylindrischen Abschnitt (30), der aufweist:
ein erstes Ende (E1) in einer ersten Richtung (Z1) entlang einer Mittelachse (C) des ringförmigen Körpers (21); und
ein zweites Ende (E2) gegenüber dem ersten Ende (E1);
einen ringförmigen ersten Abschnitt (31), der mit dem ersten Ende (E1) verbunden ist; und
einen ringförmigen zweiten Abschnitt (32), der sich vom zweiten Ende (E2) radial nach außen erstreckt, wobei eine Erstreckungsrichtung des zweiten Abschnitts (32) eine Richtung ist, die sich von einer Außenumfangsfläche (301) des zylindrischen Abschnitts (30) radial nach außen erstreckt,
wobei der ringförmige erste Abschnitt (31) eine Außenumfangsfläche aufweist, die eine erste Fläche (311) aufweist, die relativ zur Mittelachse (C) radial nach außen geneigt ist,
wobei die erste Fläche (311) eine Schräge ist, wobei ein Winkel (θ1) zwischen der Schräge und der Mittelachse (C) in einem Bereich von 1 Grad oder mehr und 15 Grad oder weniger liegt,
wobei der ringförmige zweite Abschnitt (32) eine Fläche (321) aufweist, die in die erste Richtung (Z1) weist, wobei die Fläche (321) des zweiten Abschnitts (32) eine zweite Fläche (421) aufweist,
wobei die zweite Fläche (421) in der ersten Richtung (Z1) von einer Referenzebene (R) angeordnet ist, die zur Mittelachse (C) senkrecht ist und das zweite Ende (E2) aufweist, wobei die zweite Fläche (421) unter einem Winkel (θ2) von mehr als 0 Grad zur Referenzebene (R) verläuft,
wobei die Abdeckung (22) einen ringförmigen Dichtungsabschnitt (24) aufweist, der den zylindrischen Abschnitt (30) umgibt, und
wobei der ringförmige Dichtungsabschnitt (24) mit der ersten Fläche (311) und der zweiten Fläche (421) in Kontakt steht.

2. Staubabdeckung (20) nach Anspruch 1,
wobei der ringförmige zweite Abschnitt (32) aufweist:
einen ersten ringförmigen Abschnitt (41), der sich vom zweiten Ende (E2) nach außen erstreckt, wobei eine Erstreckungsrichtung des ersten ringförmigen Abschnitts (41) senkrecht zur Mittelachse (C) verläuft; und
einen zweiten ringförmigen Abschnitt (42), der den ersten ringförmigen Abschnitt (41) umgibt, und
wobei die zweite Fläche (421) durchgehend mit einer Fläche (411) des ersten ringförmigen Abschnitts (41) ist, die die erste Richtung (Z1) weist.

3. Staubabdeckung (20) nach Anspruch 1 oder 2, wobei die zweite Fläche (421) eine Schräge ist, wobei ein Winkel (θ2) zwischen der Schräge und der Referenzebene (R) in einem Bereich von 1 Grad oder mehr und 90 Grad oder weniger liegt.

4. Staubabdeckung (20) nach einem der Ansprüche 1 bis 3,
wobei der ringförmige Dichtungsabschnitt (24) aufweist:
einen ringförmigen Hauptkörperabschnitt (50), der den zylindrischen Abschnitt (30) umgibt; und
ein Lippenabschnitt (54), der von einer dem zweiten Abschnitt (42) zugewandten Fläche des Hauptkörperabschnitts (50) vorsteht, und
wobei der Lippenabschnitt (54) mit der zweiten Fläche (421) in Kontakt steht.

5. Kugelgelenk (100), das aufweist:
einen Gelenkmechanismus (10); und
eine Staubabdeckung (20) nach einem der Ansprüche 1 bis 4,
wobei der Gelenkmechanismus (10) aufweist:
einen Kugelbolzen (11) mit einem Ende, das einen kugelförmigen Abschnitt (113) aufweist; und
ein Lager (121), das den kugelförmigen Abschnitt (113) stützt.

## Revendications

1. Couvercle anti-poussière (20) pour un joint à rotule (100), comprenant :
un corps annulaire (21) ; et
un couvercle (22),
dans lequel le corps annulaire (21) comprend :
une partie cylindrique (30) comprenant :
une première extrémité (E1) orientée dans une première direction (Z1) le long d'un axe central (C) du corps annulaire (21) ; et
une deuxième extrémité (E2) opposée à la première extrémité (E1) ;
une première partie annulaire (31) reliée à la première extrémité (E1) ; et
une deuxième partie annulaire (32) s'étendant radialement vers l'extérieur à partir de la deuxième extrémité (E2), la direction d'extension de la deuxième partie (32) étant une direction s'étendant radialement vers l'extérieur à partir d'une surface circonférentielle extérieure (301) de la partie cylindrique (30),
dans lequel la première partie annulaire (31) comprend une surface circonférentielle extérieure comportant une première surface (311) inclinée radialement vers l'extérieur par rapport à l'axe central (C),
dans lequel la première surface (311) est une pente, l'angle (θ1) entre la pente et l'axe central (C) se situant dans une plage comprise entre 1 degré ou plus et 15 degrés ou moins,
dans lequel la deuxième partie annulaire (32) comprend une surface (321) orientée dans la première direction (Z1), la surface (321) de la deuxième partie (32) comprenant une deuxième surface (421),
dans lequel la deuxième surface (421) est disposée dans la première direction (Z1) à partir d'un plan de référence (R) qui est perpendiculaire à l'axe central (C) et qui comprend la deuxième extrémité (E2), la deuxième surface (421) formant un angle (θ2) supérieur à 0 degré par rapport au plan de référence (R),
dans lequel le couvercle (22) comprend une partie d'étanchéité annulaire (24) entourant la partie cylindrique (30), et
dans lequel la partie d'étanchéité annulaire (24) est en contact avec la première surface (311) et la deuxième surface (421).

2. Couvercle anti-poussière (20) selon la revendication 1,
dans lequel la deuxième partie annulaire (32) comprend :
une première partie annulaire (41) s'étendant vers l'extérieur à partir de la deuxième extrémité (E2), la direction d'extension de la première partie annulaire (41) étant perpendiculaire à l'axe central (C) ; et
une deuxième partie annulaire (42) entourant la première partie annulaire (41), et
dans lequel la deuxième surface (421) est continue avec une surface (411) de la première partie annulaire (41) tournée vers la première direction (Z1).

3. Couvercle anti-poussière (20) selon la revendication 1 ou 2, dans lequel la deuxième surface (421) est une pente, l'angle (θ2) entre la pente et le plan de référence (R) se situant dans une plage comprise entre 1 degré ou plus et 90 degrés ou moins.

4. Couvercle anti-poussière (20) selon l'une quelconque des revendications 1 à 3, dans lequel la partie d'étanchéité annulaire (24) comprend :
une partie de corps principal (50) annulaire entourant la partie cylindrique (30) ; et
une partie formant lèvre (54) faisant saillie à partir d'une surface de la partie de corps principal (50) tournée vers la deuxième partie (42), et
dans lequel la partie formant lèvre (54) est en contact avec la deuxième surface (421).

5. Joint à rotule (100) comprenant :
un mécanisme de joint (10) ; et
un couvercle anti-poussière (20) selon l'une quelconque des revendications 1 à 4,
dans lequel le mécanisme de joint (10) comprend :
un pivot sphérique (11) dont une extrémité comporte une partie sphérique (113) ; et
un palier (121) supportant la partie sphérique (113).
